Europäisches Patentamt

(19) European Patent Office

Office européen des brevets

(11) EP 0 882 739 A2

(12) EUROPEAN PATENT APPLICATION

(43) Date of publication:
09.12.1998 Bulletin 1998/50

(51) Int. Cl.⁶: **C08F 2/00**, C08F 2/22, C10L 1/18

(21) Application number: 98110208.0

(22) Date of filing: 04.06.1998

(84) Designated Contracting States:
AT BE CH CY DE DK ES FI FR GB GR IE IT LI LU
MC NL PT SE
Designated Extension States:
AL LT LV MK RO SI

(30) Priority: 06.06.1997 JP 149094/97

(71) Applicant:
Nippon Shokubai Co., Ltd.
Osaka-shi, Osaka 541-0043 (JP)

(72) Inventors:
• Inaoka, Toru
Yokohama-shi, Kanagawa 230-0073 (JP)
• Fujioka, Kazumi
Hyogo 671-1511 (JP)
• Murakami, Yohei
Suita-shi, Osaka 564-0023 (JP)

(74) Representative:
Müller, Frithjof E., Dipl.-Ing.
Patentanwälte
MÜLLER & HOFFMANN,
Innere Wiener Strasse 17
81667 München (DE)

(54) **High molecular weight polymer and producing method the same and drag reducer**

(57) In a radical polymerization reaction, an oxygen absorbent is present in an amount corresponding to the amount of dissolved oxygen in a polymerization reaction system. As the oxygen absorbent, an oxygen absorbent which is soluble in a solvent used and has a strong reducing power is preferable. The radical polymerization by emulsion polymerization process is carried out at a reaction temperature of not more than 50°C employing a seed polymerization method. In the radical polymerization reaction, by effectively removing the dis-solved oxygen present in the polymerization reaction system, a high molecular weight polymer (a) having higher molecular weight than the conventional polymer, (b) having a straight-chain structure with less branching, and (c) being soluble in an organic solvent is produced by a producing method which is stabilized and controlled with ease. The product polymer is suitably adopted as a drag reducer.

FIG.1

EP 0 882 739 A2

Description

FIELD OF THE INVENTION

The present invention relates to a method for producing a high molecular weight polymer, in which dissolved oxygen existing in a solvent in a radical polymerization reaction is removed, and to a high molecular weight polymer obtained by the same, and to a drag reducer.

BACKGROUND OF THE INVENTION

Conventionally, as a method for producing a high molecular weight polymer, for example, a method disclosed in USP No. 3,600,349 is widely known. In this method, butadiene is subjected to emulsion polymerization using a radical polymerization initiator of the redox system and under the reaction condition of a low polymerization temperature. As a result, a polymer or copolymer of butadiene elastomer having a high molecular weight without branching is produced.

In the case of producing a polymer by a radical polymerization reaction employing emulsion polymerization as described above, it is required to remove oxygen (dissolved oxygen) existing in the polymerization reaction system. This is due to the fact that the radicals generated by the radical polymerization initiator (referred to as initiator hereinafter) are deactivated by reacting with the dissolved oxygen, and as a result a polymerization reaction (radical polymerization reaction) by the radicals cannot be started and proceeded.

In order to overcome this problem, as a method for removing the dissolved oxygen in the solvent, for example, the solvent is bubbled by an inert gas such as nitrogen or helium. Also, in the radical polymerization reaction, the inert gas is flown so as to prevent inclusion of oxygen into the polymerization reaction system.

As a method for producing a high molecular weight polymer by ensuring removal of dissolved oxygen, a method disclosed in European Patent Publication No. 0555054A1 (Application No. 93300759.3) is known. This method adopts an initiator of the redox system as in USP No. 3,600,349, however, in the method of European Patent Publication No. 0555054A1, the concentration of the dissolved oxygen in the aqueous phase of the polymerization reaction system is measured, which had not been taken into consideration in the conventional methods, and the radical polymerization reaction is carried out only after the concentration of the dissolved oxygen is sufficiently lowered.

In this method, specifically, bubbling is carried out in the aqueous phase using a nitrogen gas so that the concentration of the dissolved oxygen is not more than the concentration of oxygen in an aqueous solution of 0.5 percent of sodium bisulfite. For this reason, the radicals generated by the initiator are not deactivated by reacting with the dissolved oxygen. This allows the amount of the initiator added to the polymerization reaction system to be reduced, thereby reducing the amount of radicals. As a result, it is possible to increase the amount of monomers used in a single radical polymerization reaction, thus producing an emulsion of a polymer with a ultra high molecular weight.

Also, by taking an advantage of the fact that radicals are highly reactive to oxygen, it is possible to adopt a method in which the initiator is added to the polymerization reaction system in an amount more than required. In this method, the oxygen is removed by allowing the radicals generated to react with the dissolved oxygen, and thereafter the radical polymerization reaction is started and proceeded by residual radicals.

In bubbling of the solvent by an inert gas as described above, it is possible to remove the dissolved oxygen to some degree. However, in nitrogen or helium used as an inert gas, oxygen exists in an order of ppm; thus, by bubbling of the solvent or flowing of the solvent in the radical polymerization reaction, the minute amount oxygen existing in the inert gas is dissolved in the solvent. This deactivates the radicals in the solvent, and causes an adverse effect in the radical polymerization reaction.

In the case of producing a high molecular weight polymer, particularly as in USP No. 3,600,349 and European Patent Publication No. 0555054A1, the amount of radicals for starting and proceeding the radical polymerization reaction is less than the usual. For this reason, even when the amount of oxygen dissolved by the inert gas is minute, the radicals are deactivated, and this may obstruct starting and proceeding of the radical polymerization reaction.

However, in the method of European Patent Publication No. 0555054A1, no consideration is given to this problem, and in USP No. 3,600,349, no specific description is disclosed as to how to remove the dissolved oxygen effectively, and therefore no countermeasure can be taken against the above problem.

Also, the described method in which an excessive amount of initiator is added has a problem that it is difficult to control the radical polymerization reaction. That is to say, in the case where the amount of dissolved oxygen in the solvent is large, it is difficult to remove all the dissolved oxygen using radicals generated by the initiator. As a result, most of the radicals are used in the reaction with the dissolved oxygen, suppressing starting and proceeding of the radical polymerization reaction. On the other hand, in the case where the amount of dissolved oxygen is small, most of the radicals do not react with the oxygen and remain. As a result, because the amount of radicals in the polymerization reaction system is large, the molecular weight of the product polymer becomes small.

Namely, in the described method in which an excessive amount of initiator is added, two factors of ① starting and proceeding of the radical polymerization reaction and ② removal of the dissolved oxygen are dealt with only by a single reagent (initiator). This makes it difficult to balance the two factors ① and ②, and as a result presents a problem that it is difficult to control the radical polymerization reaction.

Further, in the described method in which an excessive amount of initiator is added, in ② removal of the dissolved oxygen, in order to allow radicals to react with the dissolved oxygen so as to remove the oxygen, it is required to have a certain period of time called a delay time. Thus, a certain period of time is required between adding of initiator to the polymerization reaction system and the start of the radical polymerization reaction. This presents a problem that the reproducibility of the polymerization reaction and the efficiency of producing the polymer are lowered.

Incidentally, when an organic liquid such as crude oil is transported through a conduit such as a pipeline, there is a case that the transport of the liquid is not carried out smoothly. This is caused by the fact that the transporting pressure on the liquid is lost by the friction generated between the liquid and the conduit. Especially, in a long distance transport, because the transporting pressure is lost in a short distance, a problem is presented that it is required to provide large numbers of pump stations.

In order to suppress such a loss of transportation pressure (referred to as pressure loss hereinafter), a drag reducer has been used conventionally. The drag reducer includes a high molecular weight polymer, and the fluidity of the liquid is improved by adding the drag reducer to the liquid, thus suppressing the pressure loss and reducing the transporting pressure on the liquid.

It is known that as the high molecular weight polymer used as a drag reducer, it is preferable to adopt a material with a molecular weight as high as possible and with a straight-chain structure with a small number of branching. For example, a polymer with a molecular weight of substantially 1,800,000 to 7,400,000 is known to exhibit the effect of a drag reducer (Kunio Nakamura, *Kobunshi/High Polymers, Japan*. Volume 34, No. 2, pp. 86 to 89, 1985).

On the effect of a high molecular weight polymer as a drag reducer, namely, on the pressure loss suppressing effect, the article in *Kobunshi/High Polymers, Japan*, Volume 34, No. 2 teaches that when 550 ppm of polystyrene with a molecular weight of 3,600,000 is added to toluene, the pressure loss is suppressed by 60 percent, and USP No. 3,758,406 teaches that when poly 2-ethylhexylacrylate with a limiting viscosity number (denoted by $[\eta]$ hereinafter) of 3.4 is added to 2lb/1000gals (substantially 200 ppm) of kerosene, the pressure loss is suppressed by 44 percent. As a producing method of such polymers, for example, a method disclosed in USP No. 3,758,406 is known. However, many of the high molecular weight polymers as obtained by this method are barely soluble in an organic liquid such as crude oil, and it is difficult to produce a high molecular weight polymer with a straight-chain structure and a small number of branching. Thus, there is a need for a high molecular weight polymer which can be suitably adopted as a drag reducer and a method for efficiently producing thereof.

SUMMARY OF THE INVENTION

It is an object of the present invention to provide a method for efficiently producing a high molecular weight polymer by effectively removing dissolved oxygen which causes an adverse effect in a radical polymerization reaction, and a high molecular weight polymer obtained by the same, and a drag reducer.

In order to achieve the above-mentioned object, a producing method of a high molecular weight polymer in accordance with the present invention is characterized in that the radical polymerization reaction is carried out in the presence of an oxygen absorbent in an amount corresponding to the amount of dissolved oxygen in the polymerization reaction system.

With this method, since the oxygen absorbent is present in the polymerization reaction system, it is possible to effectively remove the dissolved oxygen in the polymerization reaction system. This prevents radicals from reacting with the dissolved oxygen and being deactivated, and it is not required to consider deactivation of radicals by the dissolved oxygen. As a result, it is possible to reduce the amount of radical polymerization initiator added to the polymerization reaction system less than the conventional method, allowing the product polymer to have a higher molecular weight polymer than the conventional polymer. Also, since the radical polymerization reaction is stabilized by removal of the dissolved oxygen, it is possible to realize polymerization of low reactivity which has not been possible by the conventional radical polymerization reaction. Also, because the radicals generated by the radical polymerization initiator can be used solely for starting and proceeding of polymerization, it is possible to control the radical polymerization reaction with ease.

A high molecular weight polymer in accordance with the present invention is characterized in that the high molecular weight polymer is made by polymerization of monomers including (meth)acrylates which are represented by a general formula $CH_2 = CR_1 COOR$ ($R_1$ being H or $CH_3$, and R being a monovalent hydrocarbon group with a carbon number of 1 to 30), the high molecular weight polymer having a limiting viscosity number of not less than 5, and being soluble in an organic solvent.

Therefore, since the above high molecular weight polymer has a higher molecular weight than the conventional polymer, it is possible to improve the mechanical characteristics and the chemical characteristics of a molded object or a drug adopting the above polymer.

A drag reducer in accordance with the present invention is characterized in that the drag reducer contains the high molecular weight polymer in accordance with the present invention.

Therefore, since the high molecular weight polymer in accordance with the present invention has a higher molecular weight than the conventional polymer, and has a straight-chain structure with less branching, and is soluble in an organic solvent, it is possible to provide a drag reducer having higher quality than the conventional drag reducer.

For a fuller understanding of the nature and advantages of the invention, reference should be made to the ensuing detailed description taken in conjunction with the accompanying drawing.

BRIEF DESCRIPTION OF THE DRAWINGS

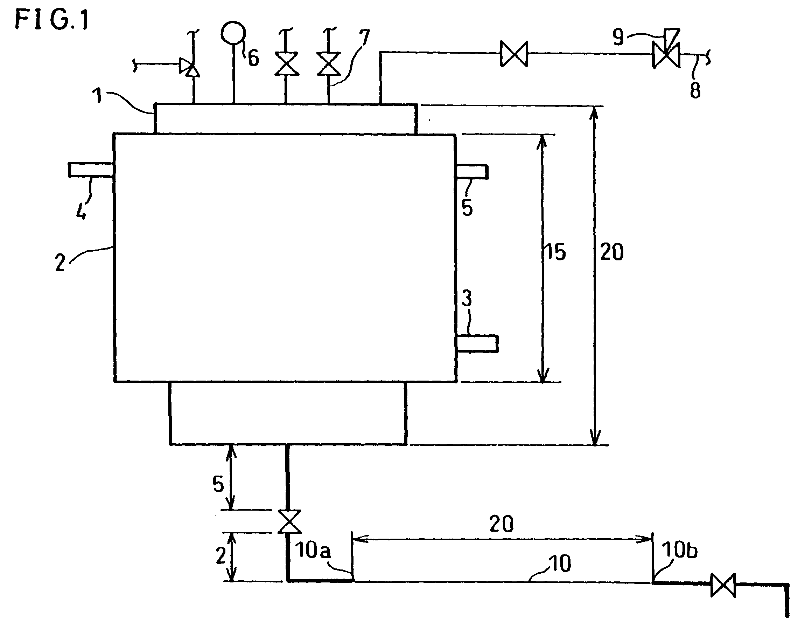

Fig. 1 is an explanatory drawing showing one arrangement of a device for measuring a performance as a drag reducer of a high molecular weight polymer in accordance with the present invention.

DETAILED DESCRIPTION OF THE PREFERRED EMBODIMENTS

The following will describe in detail one embodiment of the present invention. Note that, the present invention is not limited by the following descriptions.

In a producing method of a high molecular weight polymer of the present invention, in the polymerization reaction system, namely, in a monomer and a solvent used in a radical polymerization reaction, the radical polymerization reaction is carried out in the presence of an oxygen absorbent in the amount which can absorb dissolved oxygen contained in the polymerization reaction system (in other words, amount corresponding to the amount of dissolved oxygen). This allows the dissolved oxygen to be removed by the oxygen absorbent in the radical polymerization reaction, and as a result the radical polymerization reaction is stabilized and controlled with ease.

As a monomer adopted in the producing method of a high molecular weight polymer of the present invention, for example, (meth)acrylates represented by a general formula $CH_2 = CR_1 COOR$ ($R_1$ being H or $CH_3$, and R being a monovalent hydrocarbon group with a carbon number of 1 to 30) and monomers of multi-functionality are available. More specifically, as (meth)acrylates in the above two monomers, the following compounds are available: Methyl(meth)acrylate (MMA (carbon number of 1)), ethyl(meth)acrylate, normal propyl(meth)acrylate, isopropyl(meth)acrylate, normal butyl(meth)acrylate, isobutyl(meth)acrylate, t-butyl(meth)acrylate, normal amyl(meth)acrylate, isoamyl(meth)acrylate, octyl(meth)acrylate, 2-ethylhexyl(meth)acrylate, decyl(meth)acrylate, lauryl(meth)acrylate, stearyl(meth)acrylate, behenyl(meth)acrylate, cyclohexyl(meth)acrylate, benzyl(meth)acrylate, 2-phenoxyethyl(meth)acrylate, 3-phenylpropyl(meth)acrylate, and 2-hydroxyethyl(meth)acrylate. However, the compounds are not limited to these.

As monomers of multi-functionality, the following compounds are available: ethyleneglycol di(meth)acrylate, diethyleneglycol(meth)acrylate, divinyl benzene, diallylphthalate, trimethylolpropane tri(meth)acrylate, hexanediol(meth)acrylate, pentaerythritol tetra(meth)acrylate, dipentaerythritol hexa(meth)acrylate, di(meth)acrylate of ethylene oxide or propylene oxide adduct of bisphenol A, di(meth)acrylate of ethylene oxide or propylene oxide adduct of halogenated bisphenol A, di or tri(meth)acrylate of ethylene oxide or propylene oxide adduct of isocyanurate. However, the compounds are not limited to these.

These compounds of (meth)acrylates or monomers of multi-functionality may be used individually or in combination by mixing two or more compounds as required. Also, the compounds may include monomers, other than methacrylates or (meth)acrylates, which are polymerizable.

These monomers are used by selecting and combining appropriately in accordance with the performance required in the environment the product polymer is used. In the case of using the polymer of the present invention as a drag reducer, from (meth)acrylates, it is preferable to select and use a compound whose R in the general formula has a carbon number of 4 to 18 such as butyl(meth)acrylate, octyl(meth)acrylate, lauryl(meth)acrylate, and stearyl(meth)acrylate, and it is more preferable to adopt a compound whose R has a carbon number of 8 to 18. As such a compound, 2-ethylhexylacrylate (2EHA (carbon number of 8)) and 2-ethylhexylmethacrylate (2EHMA (carbon number of 8)) are particularly preferable. By selecting a compound whose R in the general formula has a carbon number falling in the above range, the compatibility of a fluid such as crude oil and the high molecular weight polymer of the present invention is increased, and the effect as a drag reducer is improved.

In the producing method of a high molecular weight polymer of the present invention, a polymerization process for carrying out the radical polymerization reaction is not limited; however, emulsion polymerization is particularly preferable. In emulsion polymerization, a micelle of monomers or particles of seed polymers exist in water (solvent), and the radical polymerization reaction proceeds independently with respect to each micelle or each particle. This allows the polymerization rate and the degree of polymerization to be increased compared with other methods. Also, since the micelle or particles are present in water, it is possible to control the polymerization temperature with ease, and separa-

4

tion of resulting polymers can be carried out with ease.

In the emulsion polymerization, it is preferable to adopt a seed polymerization method in which monomers are pre-polymerized beforehand to some degree to a seed polymer, and the radical polymerization reaction is proceeded as main polymerization using the seed polymer thus prepared. The seed polymerization method is preferable because it stabilizes the starting and proceeding of the radical polymerization reaction, and a polymer with higher molecular weight is produced.

Note that, as a polymerization process for the seed polymer, it is also preferable to adopt the emulsion polymerization which can be proceeded directly in the process of main polymerization, and allows the polymerization reaction to be controlled with ease. Also, it is preferable that the particle diameter of the seed polymer is in a range of 5 nm to 100 nm. Further, the method for starting the polymerization of seed polymers is not particularly limited so that a known polymerization initiator can be used. Also, instead of using a polymerization initiator, it is possible to carry out the polymerization reaction by irradiation of radioactive ray, electron beam, or UV light onto the polymerization reaction system, or by thermal polymerization by heating of the polymerization reaction system.

The surfactant used as an emulsifier for carrying out the emulsion polymerization is not particularly limited provided that the surfactant does not cause an adverse effect such as interference of the radical polymerization reaction. However, specifically, the following surfactants are available: Anionic surfactant such as (i) alkyl sulfate such as sodium dodecyl sulfate and sodium lauryl sulfate, (ii) alkane sulfonate, and (iii) 2-sulfosuccinic acid dialkyl salt. Non-ionic surfactant such as alkylphenylpolyoxyethylene ether and polyethylene glycol.

In the producing method of a high molecular weight polymer of the present invention, the oxygen absorbent for removing the dissolved oxygen is not particularly limited provided that the oxygen absorbent has a function of absorbing oxygen. However, it is preferable to adopt a compound having a strong reducing power.

As the oxygen absorbent, specifically, the following compounds are available: A salt or a compound of an inorganic acid containing phosphorous, such as phosphinate, phosphonate, and phosphite; a powder of a metal having a reducing power, such as iron, zinc, and tin; a metallic low order oxide such as ferrous oxide and triiron tetra oxide; a reducing metallic compound such as iron carbide, silicon iron, iron carbonyl compound, and iron hydroxide; a high polymer containing polyhydric phenol, such as phenol including polyhydric phenol and aldehyde resin; a salt of an inorganic acid containing sulfur, such as sulfite, thiosulfate, disulfite, and dithionite. Note that, in the case where a water insoluble oxygen absorbent is needed, it is possible to adopt the following assistant agents in combination with the above compounds of oxygen absorbent: Hydroxides, carbonate, sulfite, thiosulfate, phosphinate, phosphonate, organic acid chloride, and a halogenated compound of alkali metal or alkaline earth metal; and activated carbon, activated alumina, and activated clay.

Of the above oxygen absorbents, it is preferable to adopt an oxygen absorbent which is soluble in a solvent used in the polymerization reaction. This is because such an oxygen absorbent can be uniformly dispersed in the solvent, and the dissolved oxygen is removed more efficiently. Note that, the combination of the solvent and the oxygen absorbent is not particularly limited so that in the case of using, for example, an organic solvent having no polarity such as toluene, an oxygen absorbent soluble in such a solvent is appropriately selected and used.

Also, of the above oxygen absorbents, it is more preferable to adopt a water soluble oxygen absorbent. This is due to the fact that in the polymerization method of a high molecular weight polymer of the present invention, as described, it is preferable to adopt the emulsion polymerization in which water is used as a solvent in the polymerization process.

Of the water soluble oxygen absorbents, it is particularly preferable to adopt at least one or more reducing agents selected from the group consisting of sulfite, thiosulfate, disulfite, and dithionite, and a combination thereof. Each of the reducing agents constituting the group has a strong reducing power, and is completely unreactive to radicals. Thus, it is possible to remove only the dissolved oxygen which is reactive to radicals, and to prevent the radical polymerization reaction from being interfered by the oxygen absorbent. As a result, the radical polymerization reaction is further stabilized and controlled with ease, thus producing a polymer having a higher molecular weight.

As the specific examples of the above salts, for example, the following sodium salts are available: Sodium sulfite for sulfite, sodium thiosulfate for thiosulfate, sodium disulfite for disulfite, and sodium dithionite for dithionite.

By the presence of the oxygen absorbent in the polymerization reaction system, the dissolved oxygen in the polymerization reaction system can be effectively removed. As a result, the dissolved oxygen is prevented from reacting with the radicals, thus stabilizing the radical polymerization reaction. This enables the polymerization of low reactivity, which has not been possible conventionally. Also, since the dissolved oxygen is removed, excessive addition of the radical polymerization initiator is prevented, and accordingly the delay time is not generated, thus allowing the radical polymerization to start instantly.

The amount of the oxygen absorbent is not particularly limited provided that the amount which can remove all the dissolved oxygen in the polymerization reaction system is present in the polymerization reaction system. For example, the solvent used in the polymerization reaction includes the dissolved oxygen in a concentration of a maximum of 40 ppm in the case of an organic solvent and a maximum of 8 ppm in the case of water. Therefore, in order to ensure that the dissolved oxygen is removed, it is preferable that the oxygen absorbent is present in the polymerization reaction system in an amount slightly exceeding the amount which can completely absorb the dissolved oxygen. Specifically, it is preferable that the oxygen absorbent is in a range of 0.2 percent by weight to 5.0 percent by weight with respect to the entire polymerization reaction system. When the amount of oxygen absorbent is large, large numbers of low molecular compounds such as inorganic salts are included in the emulsion formed. This may cause an adverse effect on the polymer depending on the use. Also, it is possible to measure beforehand the amount of dissolved oxygen included in the polymerization reaction system, namely, in monomers and a solvent or in various adducts, so as to calculate the amount of oxygen absorbent required in accordance with the measured value.

The oxygen absorbent may be added beforehand to the solvent to be used, or may be added after preparing a polymerization reaction system in which monomers and a solvent or various adducts are prepared in a vessel or instrument to be used in the polymerization reaction. Here, it is preferable to bubble beforehand the solvent by an inert gas such as nitrogen or helium. The bubbling of solvent ensures that the dissolved oxygen is removed.

Note that, as a method for producing a high molecular weight polymer in which the emulsion polymerization is adopted as a polymerization process and sulfite is added to the polymerization reaction system, a method disclosed in USP No. 3,600,349 is known. In this method, in producing of a styrene-butadiene rubber by the emulsion polymerization, a radical polymerization initiator of the redox system is used. For example, as a redox initiator, a compound in which sodium sulfite is added to paramethane hydroperoxide is adopted, and added to the polymerization reaction system. The oxidation-reduction reaction thus initiated generates radicals, and the radical polymerization reaction is started and proceeded.

However, in the method as disclosed in USP No. 3,600,349, sodium sulfite is used to initiate the oxidation-reduction reaction as an initial reaction of the polymerization, not as an oxygen absorbent for removing dissolved oxygen in the polymerization system as in the producing method of a high molecular weight polymer of the present invention. This is evident by the fact that the amount of sodium sulfate added is different in the two methods. Specifically, the amount of sodium sulfite added in USP No. 3,600,349 is substantially the same as the amount of paramethane hydroperoxide, and is 0.017 percent by weight with respect to the entire polymerization reaction system. On the other hand, in the producing method of a high molecular weight polymer of the present invention, the amount of sodium sulfite added as the oxygen absorbent is the amount which can remove all the dissolved oxygen, and specifically, as mentioned above, in a range of 0.2 percent by weight to 5.0 percent by weight. This amount is equivalent of the amount more than ten times the amount of sodium sulfite added and used in the oxidation-reduction reaction.

For this reason, in the method of USP No. 3,600,349, when sodium sulfite is added without sufficiently removing the dissolved oxygen, all the sodium sulfite reacts with the dissolved oxygen and is deactivated, and as a result the radical polymerization reaction is not started. Further, the above publication does not disclose any specific description as to how to remove the dissolved oxygen effectively. Thus, in USP No. 3,600,349, unlike the producing method of a high molecular weight polymer of the present invention, the dissolved oxygen cannot be removed effectively, and the radical polymerization reaction cannot be controlled with ease.

In the producing method of a high molecular weight polymer of the present invention, the polymerization reaction is started and proceeded by a radical polymerization initiator (referred to as initiator hereinafter) which generates radicals. The initiator is not particularly limited provided that radicals are generated, and for example, the following compounds are available: Thermal decomposition initiators such as azo compounds of azobisisobutylonitrile, 2,2'-azobismethylvaleronitrile, 2,2'-azobis(2-aminodipropane) dihydrochloride, 2,2'-azobis[2-(2-imidazoline-2-yl)propane] dihydrochloride, and 4,4'-azobis(4-cyanovalerianic acid); and an initiator of the redox system composed of a combination of hydroperoxide, reducing agent, activating agent, and chelating agent or a combination of persulfate, reducing agent, and activating agent.

As the hydroperoxide used as the initiator of the redox system, for example, the following compounds are available: Cumenehydroperoxide, t-butylhydroperoxide, diisopropylbenzenehydroperoxide, p-menthanehydroperoxide, 1,1,3,3-tetramethylbutylhydroperoxide, and 2,5-dimethylhexane-2,5-dihydroperoxide. Also, as the persulfate used as the initiator of the redox system, for example, potassium persulfate and ammonium persulfate (APS) are available.

As the reducing agent used as the initiator of the redox system, for example, the following compounds are available: glucose, dextrose, formaldehydesodiumsulfoxylate, L-ascorbic acid (salt), thiosulfate such as sodium thiosulfate, sulfite such as sodium sulfite, and amines; and as the activating agent, for example, ferrous sulfate, copper sulfate, and potassium hexacyanoferrate (III) are available; and as the chelating agent, for example, sodium pyrophosphate and ethylenediamine 4 acetate are available. The amount of these compounds are changed appropriately in accordance with the combination of respective initiators.

As to the order of adding the initiator and the oxygen absorbent to the polymerization reaction system, it is particularly preferable that the oxygen absorbent is added first, and then the initiator. When the oxygen absorbent is added after the initiator, the radicals generated by the initiator react first with the dissolved oxygen, and as a result the radicals are likely to be deactivated. Namely, when the initiator is added before the oxygen absorbent, the same result as observed in the method of adding an excessive amount of initiator, which is the conventional method of removing the dissolved oxygen, is induced. On the other hand, when the oxygen absorbent is added before the initiator, the dissolved oxygen in the polymerization reaction system is removed first. Thus, the radicals generated by adding the initiator do not react with the dissolved oxygen and are not deactivated. As a result, substantially all the radicals are used in starting and proceeding of the radical polymerization reaction.

In the present invention, by adding the oxygen absorbent and the initiator to the polymerization reaction system in the above condition, the radical polymerization reaction is stabilized and is controlled with ease. Namely, conventionally, for example, the initiator is added in an excessive amount so as to deal with two factors of ① starting and proceeding of the polymerization reaction and ② removal of the dissolved oxygen. However, in the present invention, since the dissolved oxygen is removed first by the oxygen absorbent, the radicals generated by the initiator which is added after the oxygen absorbent can be used only for staring and proceeding of the polymerization. Thus, in the producing method of a high molecular weight polymer of the present invention, because a single factor is dealt with by single means, it is possible to control the radical polymerization reaction with more ease.

Note that, in the case of adopting an initiator of the redox system, because a reducing agent is necessary in the radical polymerization reaction, two types of reducing agents, (A) a reducing agent as the initiator and (B) the oxygen absorbent, are present in the polymerization reaction system. This might complicate the radical polymerization reaction, and make the controlling of the radical polymerization reaction difficult. For this reason, in the present invention, as the initiator, it is particularly preferable to adopt an azo initiator. Namely, when an azo initiator is adopted, the radical polymerization reaction is not started by the oxidation-reduction reaction. Thus, even when the oxygen absorbent (reducing agent) exists in the polymerization reaction system when the radical polymerization reaction is started, the initiator does not form an oxidation-reduction system with the oxygen absorbent, and therefore no oxidation-reduction reaction occurs between the oxygen absorbent and the initiator. Namely, the oxygen absorbent does not affect the radical polymerization reaction. Thus, the radical polymerization reaction is not complicated, and as a result it is possible to control the radical polymerization reaction with ease.

The initiators may be used individually or in combination by mixing two or more compounds as required. Also, although it depends on the type and the amount of the monomer used, it is preferable that the amount of the initiator used is in a range of 0.005 mole percent to 0.5 mole percent with respect to the monomer. The amount in this range is significantly less than the amount of initiator which has been used conventionally.

That is, in the producing method of a high molecular weight polymer of the present invention, the initiator in the above range is added after removing the oxygen in the solvent by the oxygen absorbent. Thus, it is not required to take into consideration the deactivation of radicals by the dissolved oxygen, and the amount of initiator added can be made less than that in the conventional method. As a result, compared with the conventional method, it is possible to reduce the number of radicals present in the monomer micelles and seed polymer particles in the emulsion polymerization, and an ideal condition of a single radical existing in a single micelle is nearly realized. Thus, although a slight delay time is generated, the polymerization of low reactivity, which has not been possible in the conventional radical polymerization reaction, can be realized, and a polymer with a higher molecular weight can be obtained.

It is preferable that the polymerization temperature in the emulsion polymerization is as low as possible in order to obtain a polymer with less branching. However, a polymerization temperature that is too low is not preferable because this lowers the polymerization rate. Specifically, a polymerization temperature of not more than 50°C is preferable, more preferably not more than 30°C, and particularly preferably not more than 10°C. Note that, in the emulsion polymerization, since water is used as a solvent, it is required that the polymerization temperature be higher than the freezing point of water. However, by adding an activating agent such as ethylene glycol or alcohols, even at a temperature of around 0°C, it is possible to prevent water from freezing, and the radical polymerization reaction is carried out.

Also, there is a case where the polymerization rate is increased by adding a water soluble solvent such as isopropyl alcohol, and a desirable effect may be obtained by appropriately using such a solvent in an amount which does not lower the molecular weight as caused by chain transfer to the solvent.

The polymerization time in the radical polymerization reaction is set appropriately in accordance with the type and the amount of the monomer used; however, the polymerization time of 2 hours to 30 hours is suitable. Also, in the polymerization reaction, it is preferable to flow the polymerization reaction system by the inert gas. This prevents oxygen from dissolving into the polymerization reaction system. Note that, as described above, the oxygen absorbent exists in the polymerization reaction system in an amount slightly exceeding the amount which can completely absorb the dissolved oxygen in the polymerization reaction system. Thus, even when the oxygen included in a minute amount in the inert gas is dissolved into the polymerization reaction system, the oxygen is removed by the oxygen absorbent, and an adverse effect on the radical polymerization reaction is prevented.

The high molecular weight polymer of the present invention as obtained by the described method has $[\eta]$ of not less than 5 as measured by a limiting viscosity number ($[\eta]$) measuring method in accordance with JIS-K2283. $[\eta]$ and molecular weight are related to each other by the Kuhn-Mark-Houkink-Sakurada equation, namely, by the equation of $[\eta] = K_m M^a$. Here, "M" is the molecular weight, and "$K_m$" and "a" are constants which are determined by the high polymer, solvent, temperature, and shear rate. Because these constants vary depending on the types of high polymer and solvent, etc., the molecular weight of the polymer cannot be determined straightforward from the value of $[\eta]$. However,

since [η] is proportional to the exponent of the molecular weight, it can be said that, as in the present invention, a polymer with [η] of not less than 5 is a high molecular weight polymer. When the molecular weight of the polymer in accordance with the present invention was measured by gel permeation chromatography, a measured value of a weighted mean molecular weight of not less than 5,000,000 was obtained.

When [η] is not less than 5, a characteristic performance is exhibited when applied to various uses. In the case where the present polymer is adopted as a film, sheet, molded object, or paint film, superior strength, tenacity, durability, and chemical resistancy are exhibited, and a high performance is also exhibited as an adhesive. The main object of the present invention, the effect as a drag reducer, namely, the pressure loss suppressing effect is also superior. In the above various uses, it was found that the characteristics are more pronounced when [η] is large, and in the present invention, it is preferable that [η] is not less than 7, more preferably not less than 10. Particularly, when adopting as a drag reducer, a large [η] is preferable, and a large effect can be obtained with a small amount of addition. As a drag reducer, it is preferable that [η] is not less than 12, and more preferably not less than 20.

The high molecular weight polymer of the present invention is soluble in an organic solvent, and has a straight-chain structure with a small number of branching. This allows the high molecular weight polymer to be suitably adopted as a drag reducer. Namely, the high molecular weight polymer of the present invention can be directly used as a drag reducer. A drag reducer in accordance with the present invention contains the high molecular weight polymer as a main component, and may contain a known adduct which is used in a common drag reducer. As such an adduct, specifically, an organic solvent, etc., which promotes the solubility of the drag reducer is adopted. In the case of using the high molecular weight polymer of the present invention as a drag reducer, the amount added to a fluid such as crude oil is preferably in a range of 0.1 ppm to 100 ppm, more preferably in a range of 0.5 ppm to 50 ppm.

Note that, in the present invention, by "soluble in an organic solvent", it is meant that the solubility is not less than 50 percent, preferably not less than 90 percent with respect to the organic solvent, and more preferably the high molecular weight polymer is practically completely soluble in the organic solvent. When the solubility is less than 50 percent with respect to the organic solvent, it is said that the high molecular weight polymer is barely soluble in an organic solvent.

As described, the high molecular weight polymer of the present invention has a higher molecular weight than the conventional polymer, and has a straight-chain structure with a less number of branching. The high molecular weight polymer of the present invention may be used, in accordance with the use, by extracting the polymer by removing water or by dissolving the extracted polymer into an appropriate solvent. Alternatively, the high molecular weight polymer may be used directly as an aqueous dispersion. In the case of using as a drag reducer, it is preferable to use as an aqueous dispersion. The conventional drag reducer is required to be used with maintained fluidity by diluting into the concentration of not more than 10 percent by weight using a solvent. However, as an aqueous dispersion, a liquid including polymers in high concentration and having superior fluidity is obtained, allowing the high molecular polymer to be added efficiently to crude oil. The high molecular weight polymer of the present invention, particularly the one in which the polymerization was carried out with a solvent such as IPA (isopropyl alcohol) has improved solubility in crude oil, and is particularly suitable to be used as an aqueous dispersion, and compared with the conventional polymer, has a higher quality with improved handling in high concentration.

The following will describe the present invention in more detail using Examples and Comparative Examples. Note that, the present invention is not limited to these. Also, "part" and "parts" that appear in Examples and Comparative Examples are by weight.

The following lists the analytical techniques for polymer compositions which are polymers obtained in the present Examples.

① Limiting Viscosity Number [η]

Measurements were carried out in accordance with JIS-K2283. Toluene was adopted as a solvent, and the measurements were conducted at 30°C.

② Particle Diameter

Measurements were carried out using "NICOMP 370 Auto dilute Submicron Particle Sizer" provided by Pacific Scientific Co.

③ Residual Monomer

Measurements were carried out by GPC (Gel Permeation Chromatography) using THF (tetrahydrofuran) as a solvent at a flow rate of 0.5 ml/min and the column temperature of 35°C. As a column, two "PL Gel 20 μm Mix A" provided by Polymer Laboratory were adopted, and a calibration curve was prepared using polyethylene as a standard (Maximum Molecular Weight (MAX Mw) 12,000,000).

④ Yield

After aggregating obtained polymer using methanol, the polymer was washed by water and dried in vacuum so as to measure the amount of solid component, and the yield was calculated by the following equation.

Yield = (Amount of Solid Component/Prepared Amount of monomer) × 100 (%)

⑤ Solubility

The solubility of obtained polymer was judged based on solubility of the polymer in tetrahydrofuran. Note that, ○ in Table 1 indicates the case where the polymer is completely soluble in tetrahydrofuran, and △ in Table 1 indicates the case where the polymer is soluble in tetrahydrofuran but insolubles are observed.

[Example 1]

In a 4-neck flask provided with a stirrer, a thermometer, and a condenser, 68.6 parts of ion exchanged water (referred to as water hereinafter) and 1.4 parts of ammonium polyethyleneoxide oleilether sulfate (product name "HITENOL 12"; provided by Daiichi Kogyo Seiyaku Co., Ltd.) as a surfactant were added, stirred, and dissolved each other. Thereafter, 0.3 part of normal butylmethacrylate (provided by Nippon Shokubai, Co Ltd., containing 1.6 ppm of prohibitor, methoxinone) as a seed monomer was added to the 4-neck flask, and the temperature in the 4-neck flask was increased to 80°C while stirring under the atmosphere of nitrogen gas. In the course of increasing temperature, thermal polymerization was started at a temperature in a range of 70°C to 75°C, and the polymerization reaction was substantially completed when the temperature reached 80°C. The mixture in the 4-neck flask thus prepared was maintained for 1 hour so as to obtain a seed polymer solution (1). The particle diameter of the seed polymer as measured by the light scattering measuring device was 38 nm, and the amount of residual monomer was below the level which can be detected by GPC.

The 4-neck flask containing the seed polymer solution (1) was cooled down to 2°C. Thereafter, 30 parts of normal butylmethacrylate was added as a main monomer to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.24 part of 2,2'-azobis [2-(2-imidazolin-2-yl) propane] dihydrochloride (azo initiator) (product name "VA044"; provided by Wako Pure Chemical Industries, Ltd.) as an initiator in 20 parts of water, and by bubbling of the mixed solution with helium for 30 minutes was dropped onto the reaction solution after 5 minutes since the addition of sodium sulfite. This started the polymerization reaction smoothly from the beginning, and the polymerization reaction was continued and finished after 5 hours, thus obtaining a polymer composition (1).

[Example 2]

In a 4-neck flask provided with a stirrer, a thermometer, and a condenser, 63.6 parts of water and 2.8 parts of "HITENOL 12" as a surfactant were added, stirred, and dissolved each other. Thereafter, 0.3 part of normal butylmethacrylate as a seed monomer was added to the 4-neck flask, and the temperature in the 4-neck flask was increased to 70°C while stirring under the atmosphere of nitrogen gas. Then, a solution prepared by dissolving 0.03 part of "VA044" as an initiator in 5 parts of water was added to the 4-neck flask so as to start the polymerization reaction. The mixture in the 4-neck flask thus prepared was maintained at 70°C for 2 hours so as to obtain a seed polymer solution (2). Although the particle diameter of the seed polymer was measured by the light scattering measuring device, because the concentration of the seed polymer was low, the light intensity was below the level which can be measured by the light scattering measuring device. However, it is speculated that the particle diameter is substantially 10 nm. The amount of residual monomer was below the level which can be detected by GPC.

The 4-neck flask containing the seed polymer solution (2) was cooled down to 2°C. Thereafter, 30 parts of normal butylmethacrylate was added as a main monomer to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.24 part of "VA044" as an initiator in 20 parts of water, and by bubbling of the mixed solution with helium for 30 minutes was dropped onto the reaction solution after 5 minutes since the addition sodium sulfite. This started the polymerization reaction smoothly from the beginning, and the polymerization reaction was continued and finished after 5 hours, thus obtaining a polymer composition (2).

[Example 3]

70.3 parts of the seed polymer (2) obtained in Example 2 was added to a 4-neck flask provided with a stirrer, a thermometer, and a condenser, and was cooled to 2°C. Thereafter, 30 parts of 2-ethylhexylmethacrylate (provided by Tokyo Chemical Ind. Co., containing 25 ppm of prohibitor, methoxinone) was added as a main monomer to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.017 part of "VA044" as an initiator in 20 parts of water, and by bubbling of the mixed solution with helium for 30 minutes was dropped onto the reaction solution after 5 minutes since the addition of sodium sulfite. This started the polymerization reaction smoothly from the beginning, and the polymerization reaction was continued and finished after 10 hours, thus obtaining a polymer composition (3).

[Example 4]

A seed polymer solution (3) was obtained in the same conditions as in the producing method of the seed polymer of Example 2 except that in Example 4, 2-ethylhexylmethacrylate was adopted instead of normal butylmethacrylate, and 2,2'-azobis(2-amidinopropane) dihydrochloride (azo initiator) (product name "V50"; provided by Wako Pure Chemical Industries, Ltd.) was adopted instead of "VA044" as an initiator, and polymerization temperature and polymerization time were changed to 80°C and 2 hours, respectively. The particle diameter as measured by the light scattering measuring device was 30 nm, and the amount of residual monomer was below the level which can be detected by GPC.

The 4-neck flask containing the seed polymer solution (3) was cooled down to 2°C. Thereafter, 30 parts of 2-ethylhexylmethacrylate was added as a main monomer to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.24 part of "VA044" as an initiator in 20 parts of water, and by bubbling of the mixed solution with helium for 30 minutes was dropped onto the reaction solution after 5 minutes since the addition sodium sulfite. This started the polymerization reaction smoothly from the beginning, and the polymerization reaction was continued and finished after 5 hours, thus obtaining a polymer composition (4).

[Example 5]

In a 4-neck flask provided with a stirrer, a thermometer, and a condenser, 63.6 parts of water and 1.4 parts of "HITENOL 12" as a surfactant were added, stirred, and dissolved each other. Thereafter, 0.3 part of 2-ethylhexylmethacrylate as a seed monomer, 0.003 part of $FeSO_4$, 0.03 part of Rongalite, and 0.002 part of sodium ethylenediamine 4 acetate were added to the 4-neck flask, and the temperature in the 4-neck flask was maintained at 25°C while stirring under the atmosphere of nitrogen gas. Then, a solution prepared by dissolving 0.03 part of ammonium persulfate (APS) as an initiator in 5 parts of water was added to the mixed solution in the 4-neck flask so as to start a polymerization reaction. The mixture was maintained at 25°C for 0.5 hour so as to obtain a seed polymer solution (4). The particle diameter as measured by the light scattering measuring device was 19 nm, and the amount of residual monomer was below the level which can be detected by GPC.

The 4-neck flask containing the seed polymer solution (4) was cooled down to 2°C. Thereafter, 30 parts of 2-ethylhexylmethacrylate was added as a main monomer to the 4-neck flask, and bubbling was carried out with helium for 5 minutes so as to deaerate the mixed solution, thus preparing a reaction solution. Then, a process of reducing the pressure, defoaming, and bubbling again with helium was repeated three times in the polymerization vessel. Thereafter, helium was allowed to flow so that the polymerization reaction system is under a small pressure of helium.

Thereafter, 0.02 part of sodium dithionite was added to the reaction solution by dissolving thereof in 10 parts of water so as to completely remove the oxygen in the polymerization reaction system. Then, a solution prepared by dissolving 0.24 part of "VA044" as an initiator in 20 parts of water, and by bubbling of the mixed solution with helium for 30 minutes was dropped onto the reaction solution after 5 minutes since the addition of sodium dithionite. This started the polymerization reaction smoothly from the beginning, and the polymerization reaction was continued and finished after 5 hours, thus obtaining a polymer composition (5).

[Example 6]

A seed polymer solution (5) was obtained in the same conditions as in the producing method of the seed polymer of Example 2 except that in Example 6, methylmethacrylate was adopted instead of normal butylmethacrylate, and 2.8 parts of sodium lauryl sulfate and 0.4 part of lithium chloride were adopted instead of "HITENOL 12" as a surfactant. Although the particle diameter of the seed polymer was measured by the light scattering measuring device, because the concentration of the seed polymer was low, the light intensity was below the level which can be measured by the light scattering measuring device. However, it is speculated that the particle diameter is substantially 10 nm. The amount of residual monomer was below the level which can be detected by GPC.

Also, a polymerization reaction was started in the same manner as in the main polymerization of Example 2 except that the amount of "VA044" as an initiator is changed from 0.24 part to 0.28 part, and the main monomer is changed to methylmethacrylate. This started the polymerization reaction smoothly from the beginning, and the polymerization reaction was continued and finished after 24 hours, thus obtaining a polymer composition (6).

[Example 7]

A polymerization reaction was started in the same manner as in Example 3 except that the amount of "VA044" as an initiator is changed from 0.24 part to 0.2 part, and the monomer is changed to styrene. This started the polymerization reaction smoothly from the beginning, and the polymerization reaction was continued and finished after 48 hours, thus obtaining a polymer composition (7).

[Example 8]

In a 4-neck flask provided with a stirrer, a thermometer, and a condenser, 63.6 parts of water and 1.4 parts of "HITENOL 12" as a surfactant were added, stirred, and dissolved each other. Thereafter, 0.3 part of normal butylmethacrylate as a seed monomer, 0.003 part of $FeSO_4$, 0.03 part of Rongalite, and 0.002 part of sodium ethylenediamine 4 acetate were added to the 4-neck flask, and the temperature in the 4-neck flask was maintained at 25°C while stirring under the atmosphere of nitrogen gas. Then, a solution prepared by dissolving 0.03 part of APS as an initiator in 5 parts of water was added to the mixed solution in the 4-neck flask so as to start a polymerization reaction. The mixture was maintained at 25°C for 0.5 hour so as to obtain a seed polymer solution (6). Although the particle diameter of the seed polymer was measured by the light scattering measuring device, because the concentration of the seed polymer was low, the light intensity was below the level which can be measured by the light scattering measuring device. However, it is speculated that the particle diameter is substantially 10 nm. The amount of residual monomer was below the level which can be detected by GPC.

The 4-neck flask containing the seed polymer solution (6) was cooled down to 2°C. Thereafter, a mixture of 15 parts of 2-ethylhexylmethacrylate and 15 parts of 2-ethylhexylacrylate both as a main monomer were added to the 4-neck flask, and thereafter bubbling was carried out with helium for 5 minutes so as to deaerate the mixed solution, thus preparing a reaction solution. Then, a process of reducing the pressure, defoaming, and bubbling again with helium was repeated three times in the polymerization vessel. Thereafter, helium was allowed to flow so that the polymerization reaction system is under a small pressure of helium.

Thereafter, 0.02 part of sodium dithionite and 0.2 part of sodium sulfite were added to the reaction solution by dissolving thereof in 10 parts of water so as to completely remove the oxygen in the polymerization reaction system. Then, a solution prepared by dissolving 0.24 part of "VA044" as an initiator in 20 parts of water, and by bubbling of the mixed solution with helium for 30 minutes was dropped onto the reaction solution after 5 minutes since the addition of sodium dithionite and sodium sulfite. This started the polymerization reaction smoothly from the beginning, and the polymerization reaction was continued and finished after 5 hours, thus obtaining a polymer composition (8).

[Example 9]

In a 4-neck flask provided with a stirrer, a thermometer, and a condenser, 93 parts of water and 2 parts of sodium lauryl sulfate as a surfactant were added, stirred, and dissolved each other, and a temperature of 30°C was maintained. Then, 25 parts of normal butylmethacrylate was added to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.0001 part of APS and 0.017 part of "V50" both as an initiator in 5 parts of water, and by bubbling of the mixed solution with helium for 30 minutes was dropped onto the reaction solution after 5 minutes since the addition of sodium sulfite. This started the polymerization reaction smoothly from the beginning, and the polymerization reaction was continued and finished after 5 hours, thus obtaining a polymer composition (9).

[Example 10]

In a 4-neck flask provided with a stirrer, a thermometer, and a condenser, 93 parts of water and 2 parts of sodium lauryl sulfate as a surfactant were added, stirred, and dissolved each other, and a temperature of 50°C was maintained. Then, 25 parts of 2-ethylhexylmethacrylate was added to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.017 part of "V50" as an initiator in 5 parts of water, and by bubbling of the mixed solution with helium for 30 minutes was dropped onto the reaction solution after 5 minutes since the addition of sodium sulfite. The polymerization reaction started after substantially 1 hour, and was continued and finished after 5 hours, thus obtaining a polymer composition (10).

[Example 11]

Polymerization was started in the same conditions as in Example 10 except that the amount of "V50" as an initiator was changed to 0.069 part from 0.017 part. This started the polymerization reaction smoothly from the beginning, and the polymerization reaction was continued and finished after 5 hours, thus obtaining a polymer composition (11).

[Example 12]

In a 4-neck flask provided with a stirrer, a thermometer, and a condenser, 93 parts of water and 2 parts of sodium lauryl sulfate as a surfactant were added, stirred, and dissolved each other, and a temperature of 25°C was maintained. Then, 25 parts of 2-ethylhexylmethacrylate was added to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.014 part of APS as an initiator in 5 parts of water, and by bubbling of the mixed solution with helium for 30 minutes was dropped onto the reaction solution for 1 hour after 5 minutes since the addition of sodium sulfite. This started the polymerization reaction smoothly from the beginning, and the polymerization reaction was continued and finished after 5 hours, thus obtaining a polymer composition (12).

[Example 13]

In a 4-neck flask provided with a stirrer, a thermometer, and a condenser, 93 parts of water and 2 parts of sodium dodecyl benzene sulfate as a surfactant were added, stirred, and dissolved each other, and a temperature of 25°C was maintained. Then, 25 parts of 2-ethylhexylmethacrylate was added to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Thereafter, 0.5 part of sodium sulfite was added to the reaction solution by dissolving thereof in 10 parts of water so as to completely remove the oxygen in the polymerization reaction system. Then, a solution prepared by dissolving 0.015 part of APS as an initiator in 5 parts of water, and by bubbling of the mixed solution with helium for 30 minutes was dropped onto the reaction solution after 5 minutes since the addition of sodium sulfite. This started the polymerization reaction smoothly from the beginning, and the polymerization reaction was continued and finished after 5 hours, thus obtaining a polymer composition (13).

[Comparative Example 1]

In a 4-neck flask provided with a stirrer, a thermometer, and a condenser, 93 parts of water and 2 parts of sodium lauryl sulfate as a surfactant were added, stirred, and dissolved each other, and a temperature of 30°C was maintained. Then, 25 parts of normal butylmethacrylate was added to the 4-neck flask, and bubbling was carried out with helium for 30 minutes so as to deaerate the mixed solution, thus preparing a reaction solution. After the bubbling was finished, helium was allowed to flow so that the polymerization reaction system is under a small pressure of helium.

Then, a solution prepared by dissolving 0.0001 part of APS and 0.017 part of "V50" both as an initiator in 5 parts of water, and by bubbling of the mixed solution with helium for 30 minutes was dropped onto the reaction solution. This started the polymerization reaction smoothly from the beginning, and the polymerization reaction was continued and finished after 5 hours, thus obtaining a comparative polymer composition (1).

[Comparative Example 2]

In a 4-neck flask provided with a stirrer, a thermometer, and a condenser, 93 parts of water and 2 parts of sodium lauryl sulfate as a surfactant were added, stirred, and dissolved each other, and a temperature of 50°C was maintained. Then, 25 parts of 2-ethylhexylmethacrylate was added to the 4-neck flask, thus preparing a reaction solution. Helium was allowed to flow so that the reaction solution is under a small pressure of helium. Then, a solution prepared by dissolving 0.017 part of "V50" as an initiator in 5 parts of water, and by bubbling of the mixed solution with helium for 30 minutes was dropped onto the reaction solution. However, the polymerization reaction did not proceed at all, and even though the polymerization reaction was continued for 5 hours, no polymer was obtained.

[Comparative Example 3]

In a 4-neck flask provided with a stirrer, a thermometer, and a condenser, 93 parts of water and 2 parts of sodium lauryl sulfate as a surfactant were added, stirred, and dissolved each other, and a temperature of 50°C was maintained. Then, 25 parts of 2-ethylhexylmethacrylate was added to the 4-neck flask, and bubbling was carried out with helium for 30 minutes so as to deaerate the mixed solution, thus preparing a reaction solution. Then, a solution prepared by dissolving 0.017 part of "V50" as an initiator in 5 parts of water, and by bubbling of the mixed solution with helium for 30 minutes was dropped onto the reaction solution. The polymerization reaction started after substantially 2 hours, and was continued and finished after 5 hours, thus obtaining a comparative polymer composition (2).

Table 1 shows the yields and the properties of the polymer compositions as obtained in the described manners.

[Table 1]

| Example | Polymer Composition | Particle Diameter (nm) | Yield (%) | Solubility | Limiting Viscosity Number [η] |
|---------|--------------------|-----------------------|-----------|------------|-------------------------------|
| 1 | (1) | 110 | 97 | ○ | 24.4 |
| 2 | (2) | 145 | 99 | ○ | 27.5 |
| 3 | (3) | 112 | 98 | ○ | 12.2 |
| 4 | (4) | 117 | 98 | ○ | 9.2 |
| 5 | (5) | 79 | 99 | ○ | 8.3 |
| 6 | (6) | 69 | 98 | ○ | Not Measured |
| 7 | (7) | 104 | 96 | ○ | 7.7 |
| 8 | (8) | 106 | 99 | ○ | 10.4 |
| 9 | (9) | 132 | 99 | ○ | 21.0 |
| 10 | (10) | 116 | 99 | ○ | 7.0 |
| 11 | (11) | 101 | 98 | ○ | 6.6 |
| 12 | (12) | 100 | 99 | ○ | 9.0 |
| 13 | (13) | 123 | 96 | ○ | Not Measured |
| Com. 1 | Com. (1) | 103 | 28 | ○ | 4.7 |
| Com. 2 | --- | --- | --- | --- | --- |
| Com. 3 | Com. (2) | 121 | 95 | △ | 6.5 |

As is clear from the results of Table 1, by using the producing method of a high molecular weight polymer of the present invention as described in Examples 1 through 13, it is possible to start and proceed the radical polymerization reaction smoothly. It can also be seen in Table 1 that the yields of the obtained polymer compositions (1) through (13), which are high molecular weight polymers of the present invention, are high, not less than 96 percent. In contrast, in Comparative Examples 1 through 3, the radical polymerization reaction cannot be started and proceeded smoothly, or even when the radical polymerization reaction is started and proceeded, the yields of the obtained polymer compositions are low.

Also, as is clear from the limiting viscosity numbers $[\eta]$ of the polymer compositions (1) through (13), the polymer compositions obtained by the producing method of the present invention have a significantly high molecular weight. It can also be seen in Table 1 that since each of the above polymer compositions (1) through (13) is highly soluble in an organic solvent, the high molecular weight polymers of the present invention can be suitably adopted as a drag reducer.

As described, in the producing method of a high molecular weight polymer of the present invention, dissolved oxygen can be effectively removed, preventing radicals from reacting with the dissolved oxygen and being deactivated. As a result, compared with the conventional method, it is possible to reduce the amount of radical polymerization initiator added to the polymerization reaction system, thus obtaining a higher molecular weight polymer. Also, it is possible to realize a polymerization reaction of low reactivity which has not been possible in the conventional radical polymerization reaction due to the presence of the dissolved oxygen. Namely, it is possible to stabilize and control with ease the radical polymerization reaction.

Also, the high molecular weight polymer of the present invention is obtained by the described producing method, and has a higher molecular weight than the conventional polymer, and as is clear from the high solubility indicated in Table 1, has a straight-chain structure with less number of branching, and is soluble in an organic solvent. Therefore, the high molecular weight polymer of the present invention can be suitably adopted, for example, as a drag reducer.

[Example 14]

As a polymer solution, respective solutions of the polymer compositions obtained in Example 2, Example 3, and Comparative Example 1 were added to a liquid (kerosene or xylene), respectively, and each liquid thus prepared was allowed to flow through a capillary tube. Then, a throughput increase (% TI) of each liquid due to the addition of the polymer was determined, and in order to examine the performance as a drag reducer, namely, the performance in suppressing the pressure loss of the fluid, a drag reduction (% DR) as a coefficient of the performance was evaluated.

Fig. 1 shows a measuring device. 1 is an inner cylinder, 2 is a jacket, 3 is an insertion opening of a heated fluid or a cooled fluid, 4 is a drain opening, 5 is a vent, 6 is a pressure gauge, 7 is a filling line, 8 is a nitrogen line, 9 is a pressure adjuster, 10 is a capillary, and 10a and 10b are starting terminus and ending terminus of the capillary 10, respectively. The dimensions of some of the members are indicated in inch in Fig. 1.

As a liquid for measuring the fluidity, kerosene or xylene is selected, and the polymer solution which has been adjusted to a certain concentration was added to a predetermined amount of the liquid to uniformly dissolve the polymer. The liquid thus prepared was then placed into the inner cylinder 1 of Fig. 1 so that the amount (concentration) of polymer added is a predetermined level. Then, a certain pressure of nitrogen gas was applied so as to measure the throughput in a certain period of time of the liquid flowing down through the capillary 10 having an inner diameter of 2 mm and a length of 50.8 cm (20 inch).

Table 2 shows the specific setting and the results of measurement.

① Preparation of Samples

The polymer composition of Example 3 was dissolved in toluene so as to prepare a solution of 0.5337 w/v percent. The polymer compositions of Example 2 and Comparative Example 1 were respectively dissolved in xylene so as to prepare solutions of 0.5337 w/v percent, respectively.

② Measuring Conditions

An appropriate amount of each polymer solution prepared in ① was added to the liquid so that the each polymer (polymer composition) exists in the liquid by the amount indicated in Table 2. The pressure in the cylinder was 14.7 $N/cm^2$ (1.5 $kgf/cm^2$).

③ Measurement

The weight of the liquid which flown out in 10 seconds was measured, and the throughput increase (% TI) was determined with respect to the case where no polymer is added. The throughput increase %TI was determined by the

following equation:

$$\% \, TI = \{(Q2 - Q1)/Q1\} \times 100 \, (\%)$$

where Q1 is the throughput of the liquid (g/10sec.) when the polymer is not added, and Q2 is the throughput of the liquid (g/10sec.) when the polymer is added.

④ Evaluation of % DR

% DR (performance as a drag reducer) was evaluated. The following equation was used to determine % DR.

$$\% \, DR = (1 - [1/\{1 + (\%TI/100)\}]^{1.75}) \times 100 \, (\%)$$

[Table 2]

| Polymer Composition No. | Liquid | The Amount of Polymer Added (ppm) | % TI | % DR |
|---|---|---|---|---|
| (2) | Xylene | 10 | 33.4 | 39.6 |
| | | 20 | 38.5 | 43.4 |
| | | 50 | 41.0 | 45.2 |
| (3) | Kerosene | 10 | 32.4 | 38.8 |
| | | 20 | 40.5 | 44.8 |
| | | 50 | 43.5 | 46.8 |
| Com. (1) | Xylene | 10 | 10.3 | 15.8 |
| | | 20 | 12.8 | 19.0 |
| | | 50 | 15.4 | 22.2 |

As it can be seen from Table 2, when the polymer compositions in accordance with the present invention are used, % DR are significantly large (around 40) in all cases. Therefore, when these polymers are adopted as a drag reducer, a sufficiently large pressure loss suppressing effect is exhibited.

As described, a first producing method of a high molecular weight polymer in accordance with the present invention is characterized in that the radical polymerization reaction is carried out in the presence of the oxygen absorbent in an amount corresponding to the amount of dissolved oxygen in the polymerization reaction system.

With this method, since the oxygen absorbent is present in the polymerization reaction system, it is possible to effectively remove the dissolved oxygen in the polymerization reaction system. This prevents the radicals from reacting with the dissolved oxygen and being deactivated, and it is not required to consider deactivation of radicals by the dissolved oxygen. As a result, it is possible to reduce the amount of radical polymerization initiator added to the polymerization reaction system less than the conventional method, allowing the product polymer to have a higher molecular weight polymer than the conventional polymer. Also, since the radical polymerization reaction is stabilized by removal of the dissolved oxygen, it is possible to realize polymerization of low reactivity which has not been possible by the conventional radical polymerization reaction.

Further, since the dissolved oxygen is removed by the oxygen absorbent, it is not required to add an excessive amount of the radical polymerization initiator to the polymerization reaction system, which had been done conventionally in order to remove dissolved oxygen. Also, it is possible to prevent associated generation of a delay time, allowing the radical polymerization to be started instantly.

Furthermore, it is possible to eliminate the difficulty in controlling the radical polymerization reaction, presented as a result of excessive addition of the radical polymerization initiator. Namely, in the method wherein ① starting and proceeding of the polymerization reaction and ② removal of the dissolved oxygen are both carried out by addition of the radical polymerization initiator, since it is difficult to balance the two factors ① and ②, controlling of the radical polymerization reaction also becomes difficult. However, in the described method of the present invention, since the dissolved oxygen is removed by the oxygen absorbent, the radicals generated by the radical polymerization initiator can be used solely for starting and proceeding of polymerization, making it possible to control the radical polymerization reaction with ease.

A second producing method of a high molecular weight polymer in accordance with the present invention, in the first producing method of a high molecular weight polymer, is characterized in that the oxygen absorbent is soluble in a solvent used in the radical polymerization reaction.

With this method, since the oxygen absorbent is uniformly dispersed in the solvent, it is possible to remove the dissolved oxygen more effectively, thus stabilizing and controlling with ease the radical polymerization reaction.

A third producing method of a high molecular weight polymer in accordance with the present invention, in the first or second producing method of a high molecular weight polymer, is characterized in that the oxygen absorbent is at least one kind or more of a reducing agent selected from the group consisting of sulfite, thiosulfate, disulfite, and dithionite, and a combination thereof.

With this method, since a reducing agent selected from the above group has a significantly strong reducing power, and does not react with the radicals at all, it is possible to remove only the dissolved oxygen which reacts with the radicals, and interference of the radical polymerization reaction is prevented. Hence, by using a reducing agent selected from the above group, it is possible to further stabilize and control with ease the radical polymerization reaction, and to produce an even higher molecular weight polymer.

A fourth producing method of a high molecular weight polymer in accordance with the present invention, in the first, second, or third producing method of a high molecular weight polymer, is characterized in that in the radical polymerization reaction, the radical polymerization initiator and the oxygen absorbent are introduced to the polymerization reaction system in an order of the oxygen absorbent and the radical polymerization initiator.

With this method, since the dissolved oxygen in the polymerization reaction system is removed beforehand before starting of the polymerization, the radicals generated by addition of the initiator are prevented from reacting with the dissolved oxygen and being deactivated, thus allowing the generated radicals to be used effectively for starting and proceeding of the polymerization reaction.

A fifth producing method of a high molecular weight polymer in accordance with the present invention, in the first, second, third, or fourth producing method of a high molecular weight polymer, is characterized in that a compound which does not form an oxidation-reduction system with the oxygen absorbent is used as the radical polymerization initiator. A sixth producing method of a high molecular weight polymer in accordance with the present invention, in the first, second, third, fourth, or fifth producing method of a high molecular weight polymer, is characterized in that an azo compound is used as the radical polymerization initiator.

With these methods, since the number of radicals generated from the initiator is unaffected by the amount of residual oxygen absorbent, it is possible to control the radical polymerization reaction with ease.

A seventh producing method of a high molecular weight polymer in accordance with the present invention, in the first, second, third, fourth, fifth, or sixth producing method of a high molecular weight polymer, is characterized in that a polymerization method of the radical polymerization reaction is the emulsion polymerization method. The emulsion polymerization method has an advantage in that the polymerization rate and the degree of polymerization can be increased compared with other polymerization methods such as solution polymerization, bulk polymerization, and suspension polymerization, and by applying the producing method of the present invention adopting oxygen absorbent to the emulsion polymerization method, the effect of the present invention is obtained more effectively.

The eighth producing method of a high molecular weight polymer in accordance with the present invention, in the seventh producing method of a high molecular weight polymer, is characterized in that the emulsion polymerization method is a seed polymerization method.

With these method, monomers are pre-polymerized beforehand to some degree to obtain a seed polymer, and the main polymerization is proceeded using the seed polymer thus prepared. As a result, it is possible to further stabilize and control with ease the emulsion polymerization method as the main polymerization, and to produce an even higher molecular weight polymer.

A first high molecular weight polymer in accordance with the present invention is characterized in that the high molecular weight polymer is made by polymerization of monomers including (meth)acrylates which are represented by a general formula $CH_2 = CR_1 COOR$ ($R_1$ being H or $CH_3$, and R being a monovalent hydrocarbon group with a carbon number of 1 to 30), the high molecular weight polymer having a limiting viscosity number of not less than 5, and being soluble in an organic solvent.

A second high molecular weight polymer in accordance with the present invention, having the arrangement of the first high molecular weight polymer, is characterized in that R in the general formula is a monovalent fatty hydrocarbon group with a carbon number of 8 to 18.

With these arrangements, since the above high molecular weight polymer has a higher molecular weight than the conventional polymer, it is possible to improve the mechanical characteristics and the chemical characteristics of a molded object or a drug adopting the above polymer.

A drag reducer in accordance with the present invention is characterized in that the drag reducer contains the high molecular weight polymer in accordance with the present invention.

With this arrangement, since the high molecular weight polymer in accordance with the present invention has a higher molecular weight than the conventional polymer, and has a straight-chain structure with less branching, and is soluble in an organic solvent, it is possible to provide a drag reducer having higher quality than the conventional drag reducer. The drag reducer can be suitably adopted in transporting of an organic liquid such as crude oil through a conduit such as a pipeline.

Usually, when transporting a liquid such as crude oil through a conduit such as a pipeline, a pressure loss is generated by the friction generated between the liquid and the conduit, and as a result the liquid is not transported smoothly. However, when a drag reducer containing the high molecular weight polymer of the present invention is added to the liquid, the fluidity of the liquid is improved, and the pressure loss is reduced, allowing a smooth transportation of the liquid through a conduit.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

## Claims

1. A method for producing a high molecular weight polymer, in which a radical polymerization reaction is carried out in a presence of an oxygen absorbent in an amount corresponding to an amount of dissolved oxygen in a polymerization reaction system.

2. The method as set forth in claim 1, wherein the amount of the oxygen absorbent used is not less than an amount required for absorbing all the dissolved oxygen.

3. The method as set forth in claim 1, wherein the amount of the oxygen absorbent used is an amount in a range of 0.2 percent by weight to 5.0 percent by weight with respect to an entire polymerization reaction system.

4. The method as set forth in claim 1, wherein the oxygen absorbent is soluble in a solvent used in the radical polymerization reaction.

5. The method as set forth in claim 4, wherein the oxygen absorbent is water soluble.

6. The method as set forth in claim 1, wherein the oxygen absorbent is at least one kind or more of a reducing agent selected from the group consisting of sulfite, thiosulfate, disulfite, and dithionite, and a combination thereof.

7. The method as set forth in claim 1, wherein (meth)acrylates represented by a general formula $CH_2 = CR_1COOR$ are used as a monomer ($R_1$ being H or $CH_3$, and R being a monovalent hydrocarbon group with a carbon number of 1 to 30).

8. The method as set forth in claim 7, wherein acrylates whose R in the general formula is a monovalent fatty hydrocarbon group with a carbon number of 8 to 18 are used as a monomer.

9. The method as set forth in claim 1, wherein the radical polymerization reaction is carried out using a radical polymerization initiator.

10. The method as set forth in claim 9, wherein in the radical polymerization reaction, the radical polymerization initiator and the oxygen absorbent are introduced to the polymerization reaction system in an order of the oxygen absorbent and the radical polymerization initiator.

11. The method as set forth in claim 9, wherein a compound which does not form an oxidation-reduction system with the oxygen absorbent is used as the radical polymerization initiator.

12. The method as set forth in claim 9, wherein an azo compound is used as the radical polymerization initiator.

13. The method as set forth in claim 1, wherein a polymerization method of the radical polymerization reaction is an emulsion polymerization method.

14. The method as set forth in claim 13, wherein the emulsion polymerization method is a seed polymerization method.

**15.** The method as set forth in claim 1, wherein a polymerization temperature of the radical polymerization reaction is not more than 10°C.

**16.** A high molecular weight polymer made by polymerization of monomers including (meth)acrylates which are represented by a general formula $CH_2 = CR_1 COOR$ ($R_1$ being H or $CH_3$, and R being a monovalent hydrocarbon group with a carbon number of 1 to 30), said high molecular weight polymer having a limiting viscosity number of not less than 5, and being soluble in an organic solvent.

**17.** The high molecular weight polymer as set forth in claim 16, wherein R in the general formula is a monovalent fatty hydrocarbon group with a carbon number of 8 to 18.

**18.** The high molecular weight polymer as set forth in claim 16, wherein a limiting viscosity number thereof is not less than 7.

**19.** The high molecular weight polymer as set forth in claim 18, wherein a limiting viscosity number thereof is not less than 10.

**20.** A drag reducer containing the high molecular weight polymer of claim 16.

**21.** The drag reducer as set forth in claim 20, wherein a limiting viscosity number thereof is not less than 12.

**22.** The drag reducer as set forth in claim 21, wherein a limiting viscosity number thereof is not less than 20.

**23.** The drag reducer as set forth in claim 20, wherein said drag reducer is an aqueous dispersion.

FIG.1